# EUROPEAN PATENT APPLICATION

(11) **EP 1 965 382 A1**
(43) Date of publication of application: **03.09.2008**
(21) Application number: 07103417.7
(22) Date of filing: 02.03.2007
(51) Int. Cl.: G11B 7/26, G11B 7/125

(54) **Laser beam recorder with acousto-optic modulator**

(71) Applicant: Singulus Mastering B.V., 5657 EN Eindhoven (NL)
(72) Inventor: WIJN, Josephus Marinus, c/o Singulus Masterin B.V., 5657 EN Eindhoven (NL); STOCKX, Henricus, Theodorus, c/o Singulus Masterin B.V.r, 5657 EN Eindhoven (NL); VAN DER BEEK, Niels Andreas, c/o Singulus Masterin B.V., 5657 EN Eindhoven (NL)
(74) Representative: Vossius & Partner

(57) **Abstract**

The present invention relates to a laser beam recorder for mastering an optical medium, including a laser for producing a laser beam, means for focusing the laser beam on a surface of the optical medium, and an acousto-optic modulator. According to the present invention, an amplitude and a frequency of an electric signal applied to the acousto-optic modulator is controlled in a way that both, the intensity and a deflection angle of the focused laser beam are controlled by the single acoustn-optic modulator.

## Description

The present invention relates to mastering optical media using a laser beam recorder and, in particular, to a laser beam recorder including an acousto-optic modulator for controlling a laser beam.

In laser beam recorders used for mastering of optical media, a focused laser spot is moved over a substrate to illuminate a photosensitive material, e.g., a photoresist, on the substrate and in a desired pattern. For most optical media systems, a spiral is recorded with pits and/or grooves. To realize this, the substrate is rotated and the laser spot is translated radially relative with respect to the substrate.

In order to encode information on the optical medium, the laser beam which is focused on the glass master disc on which a photoresist is coated is subject to various modifications. The intensity of the laser spot on the master disc has to be controlled. The intensity is further modulated in accordance with a write signal, which may be done, for example, using eight-to-fourteen modulation (EFM) for CDs or EFM+ for DVDs. For some recordable and rewritable formats, it is also required that the position of the laser spot makes a deviation in a radial direction, a so-called wobble.

These three different functions may be performed by different elements provided in the laser beam recorder. In case the laser used in the laser beam recorder is a solid state laser, intensity control or signal modulation may be done by the laser itself. Alternatively, an electro-optic modulator may be provided for intensity control or signal modulation. It is further possible to use an acousto-optic modulator (AOM) for intensity control, signal modulation, or radial deviation (wobble).

Usually, laser beam recorders are provided with separate units for performing these three functions. For example, in EP-A-0 301 865, an optical recording apparatus to form a tracking groove onto an optical recordable disc is disclosed. In the apparatus, a light modulator using the acoustic optical effect is used for modulating the laser beam. The recording beam output from this light modulator is supplied to a light deflector which also uses the acoustic optical effect. EP-A-0 301 865 further describes to perform modulation and deflection by a single device, a so-called light modulation deflector.

Acousto-optic modulation techniques and their applications are described, for example, in US-A-200510270631. Generally, an acousto-optic modulator includes a transparent medium. An acoustic wave, usually an ultrasonic wave, generates periodic density modulations in the transparent medium, and thus a periodic change in refractive index occurs. In that way, a diffraction grating of the phase type is produced in the transparent medium. If a laser beam is input to the transparent medium, the intensity and direction of the laser beam change depending on the intensity and frequency of the acoustic wave. Specifically, when no acoustic wave is applied to the acousto-optic modulator, the incoming laser beam passes through the modulator substantially along its original beam path. When an acoustic wave is applied to the acousto-optic modulator, a portion of the incoming beam energy is diffracted from the beam path of the 0^{th} order beam to the beam path of a 1^{st} order beam. The angle of diffraction depends on the frequency of the applied acoustic wave. If the frequency is increased, also the diffraction angle is increased. The intensity of the 0^{th} and 1^{st} order beams varies depending on the amplitude of the acoustic wave. Namely, an increase of the amplitude of the acoustic wave results in a decrease of the intensity of the 0^{th} order beam and in an increase of the intensity of the 1^{st} order beam.

It is an object of the present invention to provide an improved laser beam recorder. Specifically, the laser beam recorder of the invention should have a simplified construction which is less costly and more light efficient.

This object is achieved with the features of the claims.

In the laser beam recorder according to the present invention, intensity control and beam deflection is done by a single acousto-optic modulator by simultaneously varying the amplitude and the frequency of the acoustic wave applied to the acousto-optic modulator. The laser beam recorder according to the present invention may include a specific driver which is designed to control both, the amplitude and the frequency of the acoustic wave applied to the acousto-optic modulator. This may be done by combining input signals which separately control the amplitude of the acoustic wave for controlling the intensity of the laser beam and the frequency of the acoustic wave in order to control the deflection angle. In the laser beam recorder according to the present invention, modulating the laser beam in accordance with the information to be encoded on the optical medium may be done by the laser itself, for example, under the control of a media encoder using EFM.

Controlling the intensity may be performed using a feed-back control. For this purpose, a diode may be provided which is illuminated by light directed to the diode from the optical path of the laser beam recorder using, for example, a beam splitter. Based on the information from this diode, the amplitude of the acoustic wave applied to the acousto-optic modulator may be controlled. The frequency of the acoustic wave applied to the acousto-optic modulator may be controlled by a media encoder which varies the frequency based on the information to be encoded on the optical medium. The information on the amplitude variation and frequency variation is then combined in the driver and an accordingly controlled electric signal is applied to the acausto-optic modulator.

In order to record a spiral of the optical medium, the laser beam recorder according to the present invention further may comprise a means for translating the laser beam radially on the substrate.

With the present invention, a laser beam recorder is provided which combines the function of intensity control and deflection in a single acousto-optic modulator. Thus, a laser beam recorder including less elements is provided which consequently has a simpler structure and is less expensive than laser beam recorders known from the prior art. Since signal modulation can be performed by the laser itself, the laser beam recorder according to the present invention merely includes a single modulator unit. Since further the efficiency of an acousto-optic modulator is about 80 % for deflection as well as for intensity control, combining deflection and intensity control in a single acousto-optic modulator gives around 20 % more available light on the mastering disc compared to the situation where two different acousto-optic modulators were used.

The present invention will be now described in more detail with reference to the Figures, wherein
- Figure 1: schematically shows a laser beam recorder according to the present invention and

- Figure 2: illustrates the control of the acousto-optic modulator in the laser beam recorder according to the present invention.

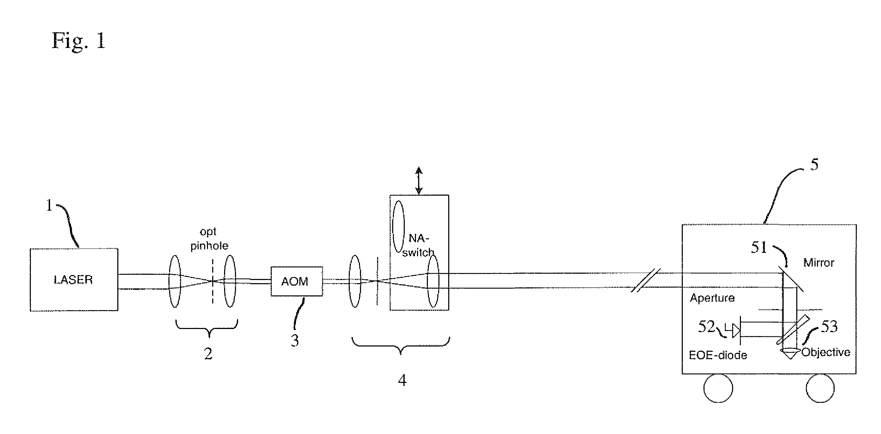

In Figure 1, a laser beam recorder according to the present invention is schematically shown. In particular, the path of the laser beam through the laser beam recorder is illustrated in Figure 1. A laser which usually is a solid state laser emits a laser beam having a wavelength of, e.g., 405 nm and a diameter of about 1.2 mm. The light emitted from the laser 1 passes through an optical element 2 which may be composed of two lenses and an optical pin hole. With this optical element 2, the beam diameter is reduced, for example, by a factor 3 to 0.4 mm when entering the acousto-optic modulator 3. This is done because the beam diameter in the acousto-optic modulator 3 determines the bandwidth of the deflection. Therefore, a smaller laser beam is required in order to realize a bandwidth of about 4 MHz which is required when mastering an optical medium. Intensity and deflection angle of the beam emitted from the acousto-optic modulator 3 is controlled by the electric signal entering the acousto-optic modulator (not shown). An accurate intensity control is important for accurately mastering the optical medium. A periodic deflection of the optical beam, that is, a wobble, may be required for recordable media as well as for copy protection purposes.

After the deflector, an optical element 4 enlarges the diameter of the laser beam to about 5 mm. Optical element 4 may include a switch to replace one of the lenses in optical element 4. By replacing a lens, the beam diameter may be changed which leads to another effective numerical aperture of the objective. This is used to change the diameter of the laser spot on the master disc, which is proportional to the wavelength divided by the numerical aperture. For DVDs, a broader laser spot on the master disc is needed than when mastering, for example, Blu-ray Discs. The pits created for DVDs are about 400 nm broad while for Blu-ray Discs-, the width is about 150 nm.

The beam is then deflected using a mirror 51. The deflected beam is focused by the objective the surface of the optical medium. A part of the light is directed to a diode 52 which is used for intensity control via the acousto-optic modulator. In order to translate the focused laser beam radially on the substrate to follow the spiral written on the optical medium, mirror 51, objective 53 and diode 52, e.g. an EOE diode, are mounted on a movable sledge 5.

In order to minimize the effect of deflection on the intensity of the laser beam, the position of the acousto-optic modulator 3 is projected into the aperture plane of the objective 53. Due to this construction, variations in the angle of the beam do not lead to variations of the intensity. This is, however, only true for one position of the movable sledge 5. This position thus should be chosen to give the best average result, which is, for example, in the middle of the area to be recorded.

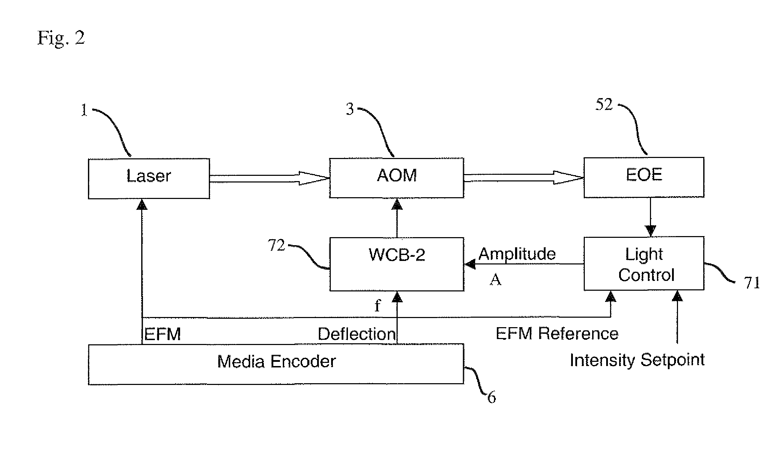

The control of the acousto-optic modulator is schematically illustrated in Figure 2. According to Figure 2, driver 72, which may be a wobble control board (WCB), controls the electric signal applied to the acousto-optic modulator 3. For this purpose, driver 72 receives input signals from a light control unit 71 and a media encoder 6. In order to control the intensity of the laser beam, the light control 71 receives information on the measured intensity received by diode 52. Based on this measured intensity and a predetermined intensity set point input to the light control 71, light control 71 transmits information for the control of the amplitude A to the driver 72.

Based on the information to be encoded on the optical medium, media encoder 6 transmits information on the frequency f which controls the deflection angle of the acousto-optic modulator, to driver 72. Driver 72 combines the information for controlling the amplitude A with the information for controlling the frequency f and accordingly generates an electric signal to be applied to the acousto-optic modulator, for controlling both, the deflection and the intensity of the laser beam.

For modulating the laser beam according to the information to be encoded on the optical medium, media encoder 6 also modulates the laser 1 based on EFM. Information on the modulation of the laser beam may also be transmitted to the light control 71 in order to correct for these modulations when controlling the intensity of the laser beam.

## Claims

1. Laser beam recorder for mastering an optical medium, including a laser for producing a laser beam, means for focusing the laser beam on a surface of the optical medium, and an acousto-optic modulator for controlling both, the intensity and a deflection angle of the focused laser beam, by controlling the amplitude and the frequency of an electric signal applied to the acousto-optic modulator.

2. The laser beam recorder of claim 1, further comprising a driver for generating the electric signal.

3. The laser beam recorder according to claim 2, wherein the driver includes a wobble control board comprising electronics adapted to combine control signals for controlling the amplitude and the frequency of the electric signal to be applied to the acousto-optic modulator.

4. The laser beam recorder according to any one of the preceding claims, further comprising a diode for measuring the intensity of the focused laser beam.

5. The laser beam recorder according to claim 4, further comprising means for controlling the amplitude of the electric signal applied to the acousto-optic modulator based on the intensity measured by the diode.

6. The laser beam recorder according to any one of the proceedings claims, further comprising means for controlling the laser to modulate the laser beam emitted from the laser in accordance with information to be encoded on the optical medium.

7. The laser beam recorder according to any one of the preceding claims, further comprising means to adapt the diameter of the laser beam, depending on the diameter needed for the optical medium to be mastered.

8. The laser beam recorder according to any one of the preceding claims, further comprising means for translating the focused laser beam radially on the substrate.

9. The laserbeam recorder according to any one of the preceding claims, further **characterized by** focusing the position of the acoustic-optic modulator into the aperture plane of the objective.
